# EUROPÄISCHE PATENTANMELDUNG

(11) **EP 0 949 480 A2**
(43) Veröffentlichungstag der Anmeldung: **13.10.1999**
(21) Anmeldenummer: 99102945.5
(22) Anmeldetag: 13.02.1999
(51) Int. Cl.: G01B 5/24

(54) **Messvorrichtung für Sägeblätter**

(30) Priorität: 17.03.1998 DE 19811459
(71) Anmelder: WALTER AG, 72072 Tübingen (DE)
(72) Erfinder: Rein, Harry, 72074 Tübingen (DE)
(74) Vertreter: Patentanwälte Rüger, Barthelt & Abel

(57) **Zusammenfassung**

Zum Vermessen von Sägeblättern ist eine Messvorrichtung (1) geschaffen, die eine Aufnahme (5) zur drehbaren Lagerung eines Sägeblatts (21) sowie eine Messspindel (36) aufweist, die bezogen auf das Sägeblatt (21) radial festellbar gehalten und um eine zu der Sägeblattachse (6) parallele Achse (46) schwenkbar gelagert ist. An der Messspindel (36) sind zwei Messschneiden (42, 41) angeordnet, die miteinander einen Winkel einschliessen und an die Spanfläche und die Freifläche eines Zahns (52) anlegbar sind. Die Besonderheit der Messvorrichtung (1) besteht in der trägheitsmomentarmen und haftreibungsfreien Lagerung der Messspindel (36) und in der Verstellbarkeit wenigstens einer der Messschneiden (41, 42). Ersteres gestattet eine einfache und zuverlässige Durchführung der Messungen auch durch wenig geübtes Personal und zweiteres die Anpassung der Messvorrichtung (36) an Sägeblätter (21) mit unterschiedlichsten Zahngrößen bzw. Verschleißzuständen.

## Beschreibung

Die Erfindung betrifft eine Vorrichtung zum Vermessen von Sägeblättern, um wesentliche Maße und/oder Winkel zu bestimmen.

In der Praxis ist es häufig erforderlich, bei vorhandenen Sägeblättern wesentliche Winkel und Abmessungen, wie bspw. den Spanwinkel und den Freiwinkel an den Zähnen des Sägeblatts zu bestimmen. Bei abgestumpften Sägeblättern ist die zwischen Freifläche und Spanfläche der Zähne definierte Schneidkante verrundet. Zum Schärfen des Sägeblatts müssen deshalb die Spanfläche und die Freifläche nachgeschliffen werden. Dies soll möglichst mit den an dem Sägeblatt vorhandenen Span- und Freiwinkeln geschehen, um den Materialabtrag an den einzelnen Zähnen und somit den Durchmesserverlust des Sägeblatts möglichst gering zu halten. Außerdem sollen die Schneideigenschaften des Sägeblatts wiederhergestellt und jedenfalls nicht grundlegend verändert werden. Auch dazu müssen Span- und Freiwinkel wie am Sägeblatt vorhanden beim Nachschleifen eingehalten werden. Dies erfordert eine möglichst präzise Erfassung der am Sägeblatt vorhandenen Span- und Freiwinkel ungeachtet des Verschleißzustands, d.h. auch bei relativ stark abgenutzten Schneidkanten.

Derartige Messungen sind häufig prozessnah auszuführen, deshalb muss die Messung möglichst einfach und sicher durchführbar sein. Wenige auch von ungeübtem Personal durchzuführende Handgriffe müssen verlässliche Messergebnisse liefern.

Davon ausgehend ist es die der Erfindung zugrundeliegende Aufgabe, eine Vorrichtung zum Vermessen von Sägeblättern zu schaffen, die wenigstens den Spanwinkel und den Freiwinkel auf einfache und verlässliche Weise misst.

Die Vorrichtung nach Anspruch 1 löst diese Aufgabe.

Die erfindungsgemäße Vorrichtung weist eine Aufnahme für ein Sägeblatt auf, mit der das Sägeblatt an seiner zentralen Spannöffnung so aufnehmbar ist, dass es um seine Mittelachse drehbar ist, die mit der Drehachse der Aufnahme übereinstimmt. In Axialrichtung ist es jedoch weitgehend fest gehalten.

Die Zähne können mit Messschneiden einer Messspindel in Eingriff gebracht werden. Die Messschneiden weisen Planflächen auf, die bei Verschwenkung der Messspindel um ihr Schwenkachse wahlweise mit der Spanfläche des Sägezahns oder mit seiner Freifläche in Anlage gebracht werden können. Die Winkelposition der Messspindel ist bei gleichmäßiger Anlage der jeweiligen Messschneide an der jeweiligen Fläche des Sägezahns (Freifläche, Spanfläche) ein Maß für den Spanwinkel oder den Freiwinkel des Zahns.

Die Messschneiden sind von ihrer Größe her so bemessen, dass sie an die Freifläche bzw. die Spanfläche angelegt werden können. Die Größe der Zähne von zu vermessenden Sägeblättern kann jedoch sehr unterschiedlich sein. Bei einigen Sägeblättern sind die Zähne lediglich wenige Millimeter groß, während bei anderen Typen die Zähne über einen Zentimeter groß sein können. Große Zähne sind, wenn sie verschlissen oder abgestumpft sind, an ihren Schneidkanten so stark verrundet, dass kleinflächige Messschneiden keine brauchbaren Messergebnisse liefern. Große Messschneiden passen jedoch nicht zu kleinen Sägeblättern. Dies gilt insbesondere für die der Planfläche zugeordnete Messschneide, die, wenn sie zu groß ist, nicht mehr in kleine Zahnzwischenräume passt. Durch die lösbare Befestigung der Messschneide für die Planfläche an der Messspindel kann die Messschneide von der Messspindel getrennt oder wenigstens etwas gelockert werden. Ist sie von der Messspindel trennbar kann sie ausgewechselt, d.h. bspw. gegen eine größere oder kleinere Messschneide ersetzt werden. Damit ist die Messvorrichtung an unterschiedliche Sägeblätter anpassbar. Alternativ dazu ist es möglich, die Verbindung zwischen der Messschneide und der Messspindel nur soweit zu lösen, dass die Messschneide verschoben werden kann. Die Verschiebung findet vorzugsweise in einer solchen Richtung statt, dass die Planfläche der Messschneide in jeder Verschiebeposition die Schwenkachse der Messspindel enthält. Auch damit sind Anpassungen an unterschiedliche Zahngrößen möglich.

Die beiden Messschneiden treffen sich bei der Schwenkachse, wobei die beiden Planflächen der Messschneiden sich bei einer Linie berühren, die mit der Schwenkachse übereinstimmt. Bedarfsweise kann zwischen den Messschneiden auch ein Spalt verbleiben. Die Ausbildung eines Messkörpers an der Messspindel mit zwei miteinander einen Winkel einschliessenden Planflächen ermöglicht eine einfache und übersichtliche Messung des Spanwinkels und des Freiwinkels eines Sägezahns. Ist wenigstens eine Messschneide von dem Messkörper trennbar, kann diese separat gefertigt werden. Soweit eine Präzisionsbearbeitung erforderlich ist, genügt ein Planschleifvorgang. Die Messschneide ist dann bspw. plattenförmig ausgebildet und wird mit einer Spannschraube gegen eine entsprechend zugeordnete Planfläche eines an der Messspindel gehaltenen Halters gespannt. In gleicher Weise kann die andere Messschneide befestigt werden. Der Halter für die Messschneiden muss dann zur präzisen Anlage der Messschneiden zwei Planflächen aufweisen, die ebenfalls im Winkel zueinander stehen. Jedoch weisen beiden Planflächen des Halters nach außen, d.h. die Planflächen "sehen" einander nicht. Der von den Planflächen eingeschlossene Winkel ist größer als 180°. Somit können diese in einfachen Planschleifverfahren hergestellt werden. Die geforderte einspringende Ecke zwischen den Planflächen der Messschneiden zum Vermessen der Sägeblattzähne ergibt sich erst, wenn die Messschneiden an die Planflächen des Halters angesetzt sind. Der Gesamtaufbau ist einfach, übersichtlich und kostengünstig herstellbar. Dies schafft die Basis für ein einfaches, kostengünstiges im praktischen Betrieb in großer Stückzahl, einsetzbares Messgerät.

Außer den Freiwinkel und dem Spanwinkel kann die Messvorrichtung auch zum Messen des Sägeblattsdurchmessers eingerichtet sein. Dazu sind entweder die Sägeblattaufnahme oder die Messspindel an dem Grundgestell derart verstellbar gelagert, dass der Abstand zwischen der Schwenkachse der Messspindel und der Drehachse der Aufnahme verändert werden kann. Zur Messung des Abstands dient eine entsprechende bspw. an dem Grundgestell gehaltene Sensoreinrichtung.

Die Sensoreinrichtung ist vorzugsweise als Absolutwert-Messeinrichtung ausgebildet und gibt somit ein Signal ab, das den Abstand zwischen der Schwenkachse und der Drehachse unmittelbar kennzeichnet. Alternativ ist es auch möglich, ein Sensormittel vorzusehen, das Relativpositionen bestimmt. Dies ist bspw. ein Sensormittel, das einer Verschiebung entsprechend Impulszüge abgibt, die dann gezählt werden müssen. Ein solches Sensormittel erfordert eine Nullung. Schliesslich ist es möglich, einen Zähler für die Zähnezahl vorzusehen. Dazu dient bspw. ein mit der Messspindel oder einem diese lagernden Träger verbundener Sensor, der den Vorbeigang eines Zahns erfasst. Die Zähnezahl ist bestimmbar, wenn das Sägeblatt unter Zählung der am Sensor vorbeilaufenden Zähne, um einen vorgegebenen Winkelbetrag gedreht wird. Der Winkelbetrag kann 360° betragen und alternativ ist es möglich andere Winkel vorzusehen, wobei die dann ermittelte Zähnezahl entsprechend dem Verhältnis zwischen dem Vollkreis und dem Winkel des Messbereichs umzurechnen ist.

Die von den Sensoren, Sensoreinrichtungen und Sensormitteln abgegebenen Signale werden vorzugsweise einer Auswerte- oder Anzeigeeinrichtung zugeführt, die eine Direktanzeige der Durchmesser der Winkel und der Zähnezahl gestattet. Außerdem können diese Werte direkt über die Mess- und Anzeigeinrichtung an eine Schleifmaschine zum Schärfen des Sägeblatts oder eine anderweitige Maschine weitergegeben werden, die sich dann entsprechend der erhaltenen und übernommenen Daten (Sensorsignale) einrichtet. Dies erleichtert die Einstellung oder Programmierung einer entsprechenden Schleifmaschine erheblich und gestattet es, hintereinander unterschiedliche Sägeblätter zu bearbeiten, ohne dass dazu großer Umrüstaufwand erforderlich wäre.

Die Meinrichtung kann durch eine optische Aufnahmeeinrichtung, vorzugsweise eine Kamera unterstützt sein. Die Kamera kann dann der Aunahme und Beobachtung der Zanform dienen. Das Bild kann auf einem Monitor vergrößert wiedergegeben werden und mittels der Auswerteeinrichtung gegebenenfalls informationstechnisch weiterverarbeitet werden. Außerdem ist es möglich, als Kamera eine Liniekamera zu verwenden, die auf eine Zahnflanke eingestellt ist oder wird. Die Linienkamera kann wenigstens eine der mechanischen Messschneiden ersetzen und bildet mit ihrem im Querschnitt linienförmigen Gesichtsfeld eine optische Messschneide.

Weitere vorteilhafte Einzelheiten von Ausführungsformen der Erfindung sind Gegenstand von Unteransprüchen und ergeben sich aus der Zeichnung und der zugehörigen Beschreibung.

In der Zeichnung ist ein Ausführungsbeispiel der Erfindung dargestellt. Es zeigen:
- Figur 1: ein Messgerät in perspektivischer Prinzipdarstellung,
- Figur 2: die Messspindel des Messgeräts nach Fig. 1, in perspektivischer, ausschnittsweiser Darstellung,
- Figur 3: die Messspindel nach Fig. 2 in einer vereinfachten Draufsicht,
- Figur 4: das Messgerät nach Fig. 1 in einer Draufsicht,
- Figur 5: das Messgerät nach Fig. 1 und 4 in einer teilweisen geschnittenen Seitenansicht, und
- Figur 6: das Messgerät nach den Fig. 1, 4 und 5 in einer teilweisen geschnittenen Vorderansicht.

### Beschreibung

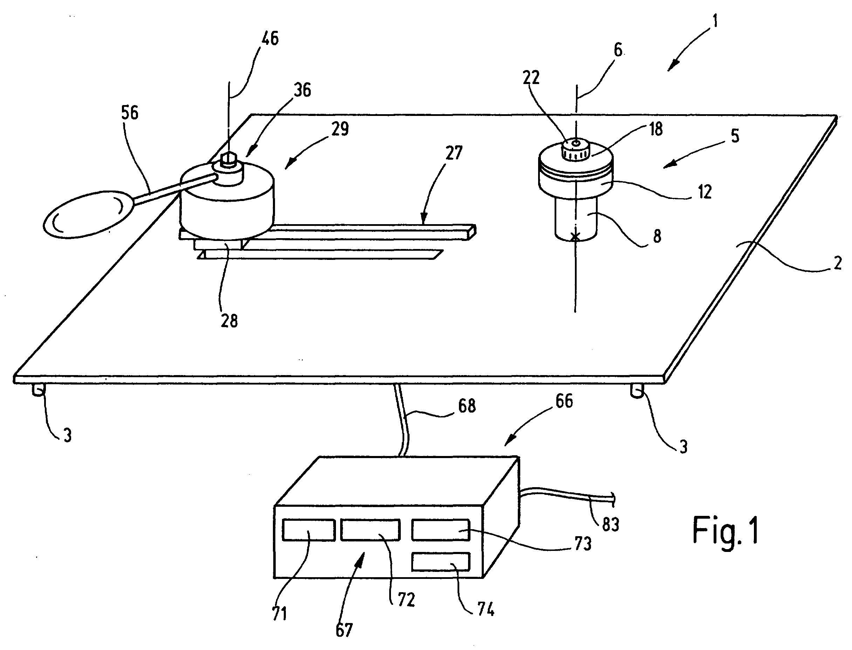

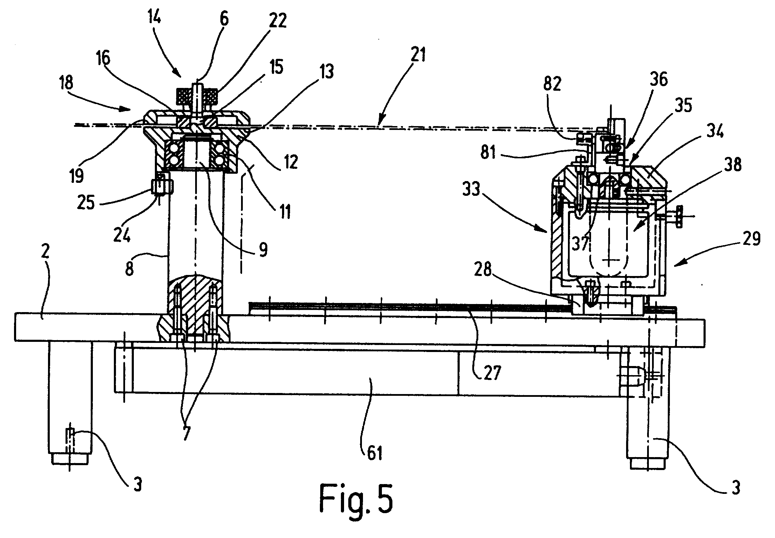

In Fig. 1 ist eine Messvorrichtung 1 veranschaulicht, die ein tischartiges Grundgestell 2 aufweist, mit der sie auf einer geeigneten Unterlage, bspw. in der Nähe einer computergesteuerten Schleifmaschine aufstellbar ist. Das dazu mit Füßen 3 versehene Grundgestell 2 ist mit einer Aufnahme 5 versehen, an der ein Sägeblatt horizontal aufspannbar ist. Die Aufnahme 5 legt eine vertikale Drehachse 6 fest. Einzelheiten der Aufnahme 5 sind insbesondere aus Fig. 5 ersichtlich. Auf dem Grundgestell 2, das im Wesentlichen durch eine ebene Platte gebildet ist, ist mittels Maschinenschrauben eine vertikale Säule 8 befestigt, die an ihrer Oberseite einen vertikal nach oben weisenden Zapfen 9 aufweist. Auf diesem sitzen zwei Rillenkugellager 11 oder anderweitige Wälzlager mit ihrem Innenring. Deren Außenring trägt einen rotationssymmetrischen Klemmbacken 12, der eine horizontale, ringförmige Aufspannfläche 13 aufweist. Mittig und konzentrisch zu der Drehachse 6 ragt von dem Klemmbacken 12 ein Zentrierstift 14 nach oben, der im Anschluß an den Klemmbacken 12 einen Zylinderabschnitt 15 zur Lagerung eines Zentrierrings 16 aufweist. Dieser sitzt spielarm auf dem Zentrierstift 14 und weist einen Außendurchmesser auf, der dem Lochdurchmesser des Sägeblattes angepasst ist. Der Zentrierring 16 ist auswechselbar.

Auf dem Zentrierstift 14 sitzt außerdem ein oberer Klemmbacken 18, der flach und topfartig ausgebildet ist und an seiner Unterseite eine ringförmige Klemmfläche zum Festklemmen eines lediglich strichpunktiert angedeuteten Sägeblatts 21 aufweist. Zur Befestigung und Spannung des Sägeblatts 21 dient letztendlich eine Rändelmutter 22, die auf dem oberen Ende des dort mit einem Gewinde versehenen Zentrierstifts 14 sitzt und die Klemmbacken 18, 12 gegeneinander spannt. Um die Drehung des Sägeblatts 21, um die Drehachse 6 auf einen vorgegebenen Winkelbereich begrenzen zu können, weist der Klemmbacken 12 einen außermittig angeordneten, vertikal nach unten weisenden Zapfen 24 auf, der mit einem sich radial von der Säule 8 weg erstreckenden Vorsprung 25 zusammenwirkt. Der Vorsprung 25 kann starr montiert sein und somit als fester Anschlag wirken, als auch ein gewisses Spiel in Umfangsrichtung aufweisen, um eine Drehung des Sägeblatts 21 um genau 360° oder einem anderen Winkel zu gestatten. Alternativ kann auch der Zapfen 24 mit einem gewissen Spiel versehen sein.

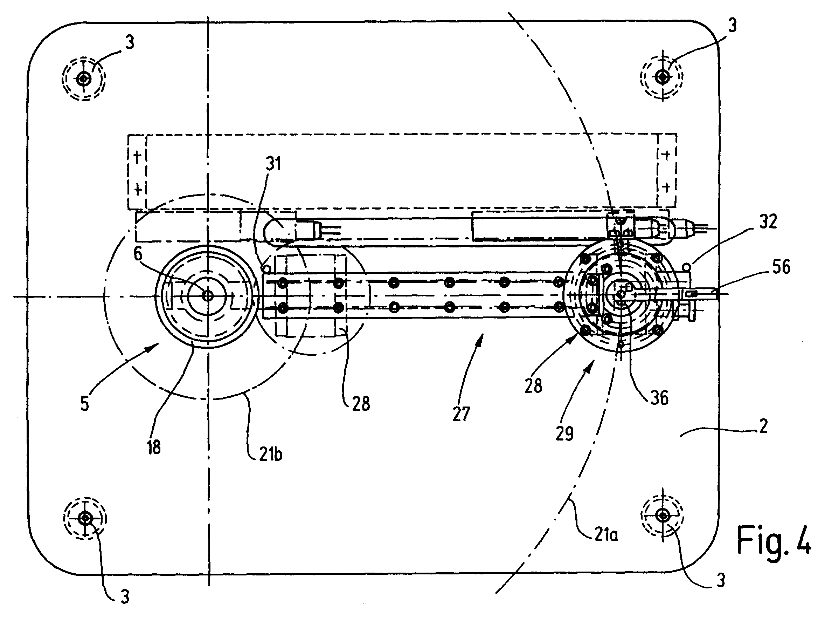

Auf der Oberseite der das Grundgestell 2 bildenden Platte ist eine Führungsschiene 27 befestigt, deren Längserstreckung, wie insbesondere aus Fig. 4, hervorgeht radial zu der Drehachse 6 ausgerichtet ist. Die Führungsschiene 27 dient der linearen Lagerung eines Schlittens 28, an dessen Oberseite eine Messeinrichtung 29 gehalten ist, die mit dem Schlitten 28 gemeinsam zwischen zwei Endanschlägen 31, 32 verfahrbar ist. Die Endanschläge werden durch die Platte des Grundgestells 2 eingelassene Stifte gebildet.

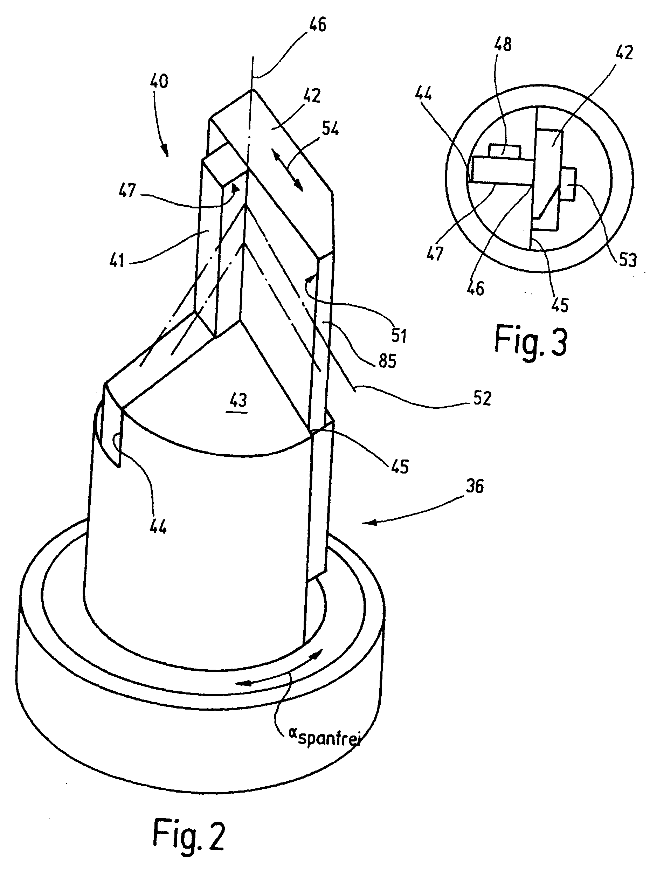

Der Aufbau der Messeinrichtung 29 geht insbesondere aus den Fig. 2, 3 und 5 hervor. Die Messeinrichtung weist ein Gehäuse 33 auf, das mittels Maschinenschrauben fest mit dem Schlitten 28 verbunden ist. Das Gehäuse ist mit einem Deckel 34 versehen, der den Innenraum des Gehäuses nach oben abschliesst. In dem Deckel ist eine Durchgangsöffnung vorgesehen, in der ein Wälzlager, wie bspw. ein Kugellager 35, gehalten ist. Dieses lagert eine Messspindel 36, die einen in den Innenraum des Gehäuses 33 ragenden Abschnitt 37 aufweist in technischem Sinne haftreibungsfrei. Die Messspindel 36 ist hier mit einem Messsystem 38 verbunden, das die Drehung und Winkelposition der Messspindel 36 ausreichend präzise erfasst.

Wie insbesondere aus Fig. 2 hervorgeht, ist die Messspindel an ihrer Stirnseite 40 mit zwei Messschneiden 41, 42 versehen. Dazu weist die Messspindel 36 an ihrem oberen Ende einen vertikal aufragenden Vorsprung 43 auf, dessen Draufsicht kreissegmentförmig ist. Er wird durch zwei bspw. aus Figur 3 ersichtliche Planflächen 44, 45 begrenzt, die jeweils relativ genau an einer von dem Wälzlager 35 festgelegten Schwenkachse 46 enden. Diese bildet die von den Planflächen 44, 45 definierte Eckkante.

Die der Bestimmung des Freiwinkels dienende Messschneide 41 weist eine sich oberhalb des Vorsprungs 43 erstreckende Planfläche 47 auf, die in einer gemeinsamen Ebene mit der Planfläche 44 liegt, wenn die Messschneide 41 mittels einer entsprechenden Befestigungsschraube 48 gegen die Planfläche 44 gespannt ist.

Die Messschneide 42 weist ebenfalls eine Planfläche 51 auf, mit der sie an der Planfläche 45 anliegt und die sich über den Vorsprung 43 hinaus vertikal nach oben erstreckt. Die Planflächen 47, 51 treffen sich somit an der Schwenkachse 46. Es kann im Einzelfall jedoch auch genügen, wenn die Messschneide 41 nicht bis zu der Schwenkachse 46 reicht, so dass zwischen der Messschneide 41 und der Planfläche 51 der Messschneide 42 ein mehr oder weniger großer Spalt bleibt. Zwar liegt die Schwenkachse 46 dann nicht mehr am Rand der Planfläche 47, jedoch liegt sie in einer Ebene, die auch die Planfläche 47 enthält.

Die Messschneide 42 dient der Anlage an die Spanfläche eines in Fig. 2 lediglich schematisch strichpunktiert angedeuteten Sägezahns 52 des Sägeblatts 21. Die Messschneide 42 ist an ihrer dem Sägeblatt 21 zugewandten Seite etwas verjüngt, um auch in enge Zahnzwischenräume hineinzufinden.

Im Einzelfall kann die Messschneide 42 mittels einer Maschinenschraube 53 (Fig. 3) fest gegen die Planfläche 45 gespannt sein. Vorzugsweise weist die Messschneide 42 ein Langloch auf, so dass sie nach Lösen der Schraube 53 in Richtung des in Fig. 2 angedeuteten Pfeils 54 parallel zu der Planfläche 45 und zu ihrer eigenen Planfläche so verschoben werden kann, dass die Schwenkachse 46 in jeder Verschiebeposition in der Planfläche 51 liegt. Damit ist eine Anpassung an unterschiedlich tiefe Zahnzwischenräume möglich, so dass bei großen Zähnen eine gute Anlage an der Spanfläche sichergestellt ist, wobei es andererseits auch möglich ist, relativ kleine Zähne zu vermessen.

Alternativ kann ein Wechselsatz auswechselbarer Messschneiden 42 unterschiedlicher Größe bereitgestellt werden, die dann bedarfsweise mit der Messspindel 36 verbunden werden.

Zum Verschwenken der Messspindel 36 um ihre Schwenkachse 46 dient eine in Fig. 1 lediglich zur Veranschaulichung übergroß dargestellte und bspw. der Fig. 4 zu entnehmenden Handhabe 56, die möglichst kurz und leicht ausgebildet ist. Diese Maßnahme dient dazu das Massenträgheitsmoment der Messspindel 36 und aller mit ihr verbundenen Teile aus später erläuterten Gründen möglichst gering zu halten.

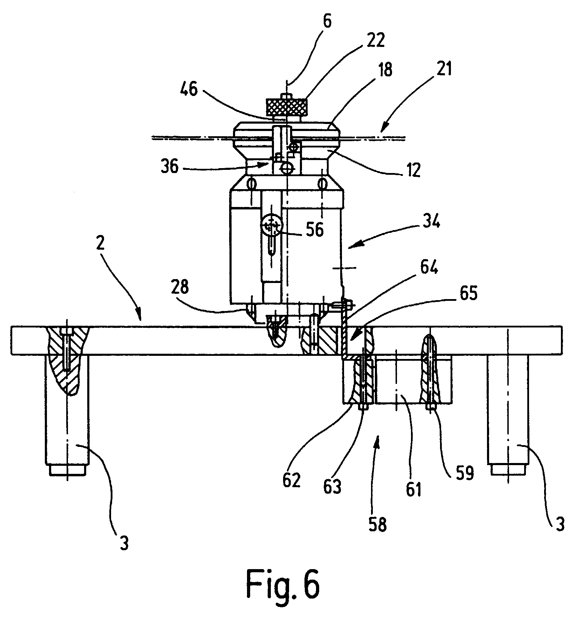

Wie insbesondere aus den Fig. 1, 4 und 6 hervorgeht, ist an dem Grundgestell 2 unterhalb dessen Platte ein Sensormittel 58 angeordnet, das der Erfassung der Position des Schlittens 28 und somit der Messspindel 36 (Schwenkachse 46) in Bezug auf den Abstand der Schwenkachse 46 von der Drehachse 6 der Aufnahme 5 dient. Das Sensormittel 58 weist einen feststehenden, durch Schrauben 59 mit dem Grundgestell 2 verbundenen Teil 61 und einen beweglichen Teil 62 auf, der durch Schrauben 63 mit einem Halter 64 verbunden ist, der das Grundgestell 2 bei einem sich parallel zu der Führungsschiene 27 erstreckenden Längsschlitz 65 durchgreift. Der Längsschlitz 65 erstreckt sich über den gesamten Bewegungsweg des Schlittens 28. Der Träger 64 ist mit seinem von dem beweglichen Teil 62 des Sensormittels 58 abliegenden Ende, das oberhalb der Platte des Grundgestells 2 durch den Längsschlitz 65 ragt, mit dem Schlitten 28 fest verbunden. Das Sensormittel gibt, wie in Fig. 1 angedeutet, ein Signal an eine Auswerteeinheit 66, die mit einer Anzeigeeinrichtung 67 versehen ist. Über entsprechnde Verbindungsleitungen 68 erhält die Auswerteeinrichtung 66 nicht nur das Signal von dem Sensormittel 58, sondern darüberhinaus von der Sensoreinrichtung 38, die als Winkelgeber ausgebildet ist. Die Anzeigeeinrichtung 67 weist dementsprechend Anzeigefelder oder -mittel 71, 72, 73 zur Anzeige des Freiwinkels des Spanwinkels und des Sägeblattdurchmessers auf. Zusätzlich kann ein Anzeigefeld 74 zur Anzeige der Zähnezahl vorgesehen sein (Bedienelemente zur Koordinierung, Steuerung und Beeinflussung des Messvorgagns sind an der Auswerteeinrichtung 66 vorgesehen, jedoch nicht dargestellt.)

Um die Zähnezahl des Sägeblatts 21 zur Anzeige auf dem Anzeigefeld 74 zu bestimmen, ist, wie in Fig. 5 veranschaulicht, an dem Deckel 34 des Gehäuses 33 ein Halter 81 angeordnet, der bspw. einen magnetischen Sensor 82 unmittelbar unterhalb der Ebene des Sägeblatts 21 hält. Der Sensor 82 erfasst, ob in seiner Nähe oder über ihm ein Zahn oder eine Zahnlücke steht und gibt beim Übergang von dem Zahn zu der Zahnlücke oder umgekehrt ein Signal ab. Dieses wird der Auswerteeinrichtung 66 zugeleitet.

Die Auswerteeinheit 66 kann über eine weitere Leitung 82 mit einer nicht weiter dargestellten Bearbeitungsmaschine, wie bspw. einer Schleifmaschine verbunden sein, die sich entsprechend der mit der Messvorrichtung 1 ermittelten Daten einstellt.

Die insoweit beschriebene Messvorrichtung 1 arbeitet wie folgt:

Zum Vermessen eine Sägeblatts 21 wird die Messspindel 36 mit dem Schlitten 28 zunächst in eine radial äußere Position gefahren, die, wie Fig. 4 zeigt, bspw. die Montage eines großen Sägeblatts 21a gestattet. Bei kleinen Sägeblättern 21b genügt ein geringer Abstand der Messspindel 36 von der Aufnahme 5, um ein Sägeblatt zu montieren. Zur Montage des Sägeblatts werden die Rändelmutter 22 und der Klemmbacken 18 abgenommen, ein geeigneter Zentrierring 16 aufgesetzt, das Sägeblatt auf dem Zentrierring und die Planfläche 13 gelegt und nachfolgend der Klemmbacken 18 aufgesetzt und mit der Rändelmutter 22 festgespannt. Das Sägeblatt 21 ist nun in der aus Fig. 5 ersichtlichen strichpunktiert dargestellten Weise gehalten.

Mit Hilfe der Handhabe 46 wird die Messspindel 36 so gedreht, dass die Planfläche 51 der Messschneide 42 auf einen etwas größeren Radialspanwinkel eingestellt ist, als er an dem Sägeblatt 21 vermutet wird. Die Messspindel 36 wird nun durch entsprechende Verstellung in Radialrichtung soweit an das Sägeblatt 21 herangefahren, dass sich die Schneidkante oder Spitze des jeweiligen Zahns 52 in der Nähe der Schwenkachse 46 an die äußere Messchneide 41, d.h. deren Planfläche 47 anliegt. In diesem Stadium liegt die Planfläche 51 noch nicht linienhaft an der Spanfläche an. Vielmehr steht die Messschneide 42 mit ihrer dem Sägeblatt 21 zugewandten Kante 85 an der Spanfläche. Wird das Sägeblatt 21 nun von Hand etwas gegen die Messspindel 36 gedreht, drückt der Zahn 52 die Messschneide 42 in linienhafte Anlage. Zugleich kommt die Spitze des Zahns 52 in die zwischen den Planflächen 47, 51 definierte Ecke.

Ein möglichst geringes Massenträgheitsmoment und eine reibungs- und spielarme Lagerung der Messpindel 36 durch das Wälzlager 35 sind hier für eine ordnungsgemäße Funktion wesentlich. Die gewichts- und somit trägheitsmomentarme Ausbildung der Messspindel 36 stellt in Verbindung mit der haftreibungsarmen oder haftreibungsfreien Lagerung der Messspindel 36 sicher, dass die Messspindel bei dem beschriebenen Messvorgang nur soweit dreht, bis die Planfläche 51 in einer Linie an der Spanfläche des Zahns 52 anliegt und nicht "über das Ziel hinausschiesst", d.h. mit Schwung weiterdreht. Um die Messung zu unterstützen, können unter Umständen Federmittel vorgesehen werden, die die Messspindel 36 mit geringer Kraft in einer vorgegebenen oder wählbaren Drehrichtung vorspannen. Außerdem können haftreibungsfreie Dämpfungsmittel, wie Wirbelstrombremsen, vorgesehen werden. Dazu genügt bspw. ein in dem Gehäuse 33 untergebrachter auf die Messspindel 36 oder mit dieser verbundene Teile einwirkender Dauermagnet.

Wenn die Planfläche 51 an der Spanfläche des Zahns 52 anliegt, wird der Radialspanwinkel von der Auswerteeinrichtung 66 erfasst, die entsprechende Signale von der Sensoreinrichtung 38 empfängt. Zur Messung des Freiwinkels kann die Messspindel von Hand so weit geschwenkt werden, dass die Planfläche 47 an der Außenseite des Zahns 52 anliegt. Außerdem ist es auch möglich, die Messspindel auf einen etwas größeren als erwarteten Freiwinkel einzustellen und die Messspindel 46 dann so radial von außen her an den Zahn 56 heranzufahren, dass die Messspindel 36 automatisch in die Freiwinkelstellung schwenkt, in der die Planfläche 47 linienhaft an der Freifläche des Zahns 52 anliegt. In diesem Fall erfolgt die Messung des Spanwinkels durch Bewegung des Zahns 52 in Umfangsrichtung (Drehung des Sägeblatts um die Drehachse 6 um einen kleinen Winkelbetrag) und die Messung des Freiwinkels durch Bewegung der Messspindel 36 in Radialrichtung. In dieser Position des Sägeblatts 21 und der Messspindel 36 zeigt der Zahn 52 mit seiner Spitze auf die Schwenkachse 46 in die Ecke zwischen den Messschneiden 41, 42 der Abstand zwischen der Schwenkachse 46 und der Drehachse 6 entspricht dem Außendurchmesser des Sägeblatts 21. Der Außendurchmesser wird von dem Sensormittel 58 erfasst und an die Auswerteeinrichtung 66 übermittelt.

Soll die Zähnezahl bestimmt werden, wird die Messspindel etwas in Radialrichtung nach außen verstellt, indem sie mit dem Schlitten 28 von der Aufnahme 5 weg verfahren wird, bis der Zahn 52 des Sägeblatts 21 nicht mehr in die Messschneiden 41, 42 greift. Das Sägeblatt wird nun durch den Drehbereich gedreht, der durch den Vorsprung 25 und dem Zapfen 24 (Fig. 5) vorgegeben ist. Die von dem Sensor 82 erfasste Zahl der Zahndurchgänge wird als Zähnezahl von der Auswerteinrichtung 66 angezeigt.

Zum Vermessen von Sägeblättern ist eine Messvorrichtung geschaffen, die eine Aufnahme 5 zur drehbaren Lagerung eines Sägeblatts sowie eine Messspindel aufweist, die bezogen auf das Sägeblatt radial festellbar gehalten und um eine zu der Sägeblattachse parallele Achse schwenkbar gelagert ist. An der Messspindel sind zwei Messschneiden angeordnet, die miteinander einen Winkel einschliessen und an die Spanfläche und die Freifläche eines Zahns 52 anlegbar sind. Die Besonderheit der Messvorrichtung besteht in der trägheitsmomentarmen und haftreibungsfreien Lagerung der Messspindel und in der Verstellbarkeit wenigstens einer der Messschneiden. Ersteres gestattet eine einfache und zuverlässige Durchführung der Messungen auch durch wenig geübtes Personal und zweiteres die Anpassung der Messvorrichtung an Sägeblätter mit unterschiedlichsten Zahngrößen bzw. Verschleißzuständen.

## Patentansprüche

1. Vorrichtung (1) zum Vermessen von Sägeblättern (21),
mit einem Grundgestell (2),
mit einer Aufnahme (5) für das Sägeblatt (21), die eine lösbare Befestigungseinrichtung (12, 18) für das Sägeblatt (21) aufweist und die an dem Grundgestell (2) um eine Drehachse (6) drehbar und axial unverschiebbar gelagert ist,
mit einer Messspindel (36), die an dem Grundgestell (2) um eine zu der Drehachse (6) der Aufnahme (5) parallele Schwenkachse (46) wenigstens in einem beschränkten Schwenkbereich reibungsarm verschwenkbar gelagert ist und die mit einer Handhabungseinrichtung (56) zum manuellen Verschwenken der Messspindel (36) verbunden ist,
mit einer ersten Messschneide (42), die eine Planfläche (51) aufweist und die mit der Messspindel (36) lösbar verbunden ist, wobei die Schwenkachse (46) der Messspindel (36) in der Planfläche (51) der Messschneide (42) verläuft, wenn die Messschneide (42) mit der Messspindel (36) verbunden ist,
mit einer zweiten Messschneide (41), die eine Planfläche (47) aufweist und die mit der Messspindel (36) verbunden ist, wobei die Schwenkachse (46) der Messspindel (36) in einer die Planfläche (47) enthaltenden Ebene verläuft, wenn die Messschneide (41) mit der Messspindel verbunden ist,
mit einer Sensoreinrichtung (38) zur Erfassung der Winkelposition der Messspindel (36), wobei die Sensoreinrichtung (38) ein Ausgangssignal abgibt, das die Drehposition der Messspindel (36) kennzeichnet, und
mit einer Auswerteeinrichtung (66) zur Anzeige und/oder Weitergabe der ermittelten Winkelmesswerte an andere Einrichtungen, wobei der Auswerteeinrichtung (66) wenigstens das von der Sensoreinrichtung (38) abgegebene Signal zugeführt ist.

2. Vorrichtung nach Anspruch 1, dadurch gekennzeichnet, dass die Messspindel (36) an dem Grundgestell (2) in einer bezüglich der Drehachse (6) radialen Richtung verschiebbar gelagert ist.

3. Vorrichtung nach Anspruch 2, dadurch gekennzeichnet, dass sie ein Sensormittel (58) aufweist, das ein die Radialposition der Messspindel (36) kennzeichnendes Signal abgibt, das der Auswerteeinrichtung (66) zugeführt ist.

4. Vorrichtung nach Anspruch 1, dadurch gekennzeichnet, dass die Aufnahme (5) an dem Grundgestell (2) in einer bezüglich der Drehachse (6) radialen Richtung verschiebbar gelagert ist.

5. Vorrichtung nach Anspruch 4, dadurch gekennzeichnet, dass sie ein Sensormittel aufweist, das ein die Radialposition der Aufnahme kennzeichnendes Signal abgibt, das der Auswerteeinrichtung (66) zugeführt ist.

6. Vorrichtung nach Anspruch 1, dadurch gekennzeichnet, dass die Planfläche (51) der ersten Messschneide (42) und die Planfläche (47) der zweiten Messschneide (41) miteinander einen Winkel einschließen.

7. Vorrichtung nach Anspruch 6, dadurch gekennzeichnet, dass der von den Planflächen (47, 51) eingeschlossene Winkel ein rechter Winkel ist.

8. Vorrichtung nach Anspruch 1, dadurch gekennzeichnet, dass eine Kante der Planfläche (47) der zweiten Messschneide (41) die Planfläche (51) der ersten Messschneide (42) berührt.

9. Vorrichtung nach Anspruch 1, dadurch gekennzeichnet, dass die erste Messschneide (42) an der Messspindel (36) in einer Richtung verstellbar gehalten ist, die parallel zu der Planfläche (51) und rechtwinklig zu der Schwenkachse (46) ausgerichtet ist.

10. Vorrichtung nach Anspruch 1, dadurch gekennzeichnet, dass die Messspindel (36) massenträgheitsmomentarm ausgebildet und mittels eines Wälzlagers haftreibungsfrei gelagert ist.

11. Vorrichtung nach Anspruch 1, dadurch gekennzeichnet, dass der Schwenkbereich der Messspindel (36) derart festgelegt ist, dass die erste Messschneide (42) in eine Position schwenkbar ist, in der die Planfläche (51) bezogen auf die Drehachse (6) in Radialrichtung ausgerichtet ist.

12. Vorrichtung nach Anspruch 10, dadurch gekennzeichnet, dass der Schwenkbereich derart festgelegt ist, dass die zweite Messschneide (41) in eine Position schwenkbar ist, in der die Planfläche (47) bezogen auf die Drehachse (6) in Umfangsrichtung ausgerichtet ist.

13. Vorrichtung nach Anspruch 1, dadurch gekennzeichnet, dass von dem Grundgestell (2) eine Erfassungseinrichtung (82) zur Bestimmung der Anzahl der an einem Sägeblatt (21) vorhandenen Zähne (52) getragen ist.

14. Vorrichtung nach Anspruch 1, dadurch gekennzeichnet, dass die Erfassungseinrichtung (82) mit einem Zwischenträger (81, 34, 28) verbunden ist, der die Messspindel (36) an dem Grundgestell (2) lagert und der mit der Messspindel (36) in Radialrichtung verstellbar angeordnet ist.

15. Vorrichtung nach Anspruch 14, dadurch gekennzeichnet, dass die Erfassungseinrichtung (82) eine magnetische Erfassungseinrichtung ist, die ein Element aufweist, das eine Induktivität aufweist, deren Größe davon Abhängig ist, ob ein Zahn (52) oder ein Zahnzwischenraum des Sägeblatts (21) über der Erfassungseinrichtung (82) steht.

16. Vorrichtung nach Anspruch 1, dadurch gekennzeichnet, dass die Aufnahme (5) einen beschränkten Drehbereich aufweist.

17. Vorrichtung nach Anspruch 14, dadurch gekennzeichnet, dass der Drehbereich 360° beträgt.

18. Vorrichtung nach Anspruch 1, dadurch gekennzeichnet, dass die zweite Messschneide (41) lösbar mit der Messspindel (36) verbunden ist.

19. Vorrichtung nach Anspruch 1, dadurch gekennzeichnet, dass die Vorrichtung wenigstens eine optische Aufnahmeeinrichtung aufweist, die mit der Auswerteeinrichtung verbunden ist und in deren Blickfeld wenigstens ein Abschnitt des Zahns positionierbar ist.

20. Vorrichtung nach Anspruch 1, dadurch gekennzeichnet, dass die optische Aufnahmeeinrichtung mit der Messspindel verbunden und von dieser positionierbar ist.

21. Vorrichtung nach Anspruch 1, dadurch gekennzeichnet, dass die optische Aufnahmeeinrichtung eine Linienkamera ist.

22. Vorrichtung nach Anspruch 21, dadurch gekennzeichnet, dass die Linienkamera wenigstens eine der Meßschneiden ersetzt.
